Europäisches Patentamt

European Patent Office

Office européen des brevets

(19)

(11) Publication number: **0 217 514 B1**

(12) **EUROPEAN PATENT SPECIFICATION**

(45) Date of publication of patent specification: **21.10.92**   (51) Int. Cl.⁵: **H02G 3/28**, H01R 25/16

(21) Application number: **86306252.7**

(22) Date of filing: **13.08.86**

(54) **Channelled base for divider panels.**

(30) Priority: **18.09.85 IT 6779085**

(43) Date of publication of application:
**08.04.87 Bulletin 87/15**

(45) Publication of the grant of the patent:
**21.10.92 Bulletin 92/43**

(84) Designated Contracting States:
**DE FR GB**

(56) References cited:
**EP-A- 0 202 075**
**US-A- 4 278 834**
**US-A- 4 406 101**
**US-A- 4 596 098**
**US-E- 31 733**

(73) Proprietor: **OLIVETTI SYNTHESIS S.p.A.**
**Via G. Jervis 77**
**I-10015 Ivrea (Turin)(IT)**

(72) Inventor: **Galli, Massimo**
**Via Carlo Pisacane 4**
**I-54100 Massa (Ms)(IT)**

(74) Representative: **Pears, David Ashley et al**
**REDDIE & GROSE 16 Theobalds Road**
**London WC1X 8PL(GB)**

# Description

The present invention relates to a channelled base member for divider panels provided with supply passages for electrical cables for supplying items of electrical equipment disposed near the divider panels, and comprising a base, an upper wall portion and a substantially vertical wall portion, made of plastic material and defining first and second supply passages disposed on opposite sides of the vertical wall portion, in which the base is integral with a substantially rigid cover element connected thereto by a flexible hinge and movable between a first position in which access to a first supply passage is allowed and a second position in which the cover completely covers the first passage, in which a latch means latches the cover with the upper wall portion when the cover element is in the second position.

The invention also relates to a method of erecting divider panels.

A wall panel system of the above defined type is known from U.S. Reissue Patent No. US-E-31,733 wherein each panel includes a rectangular frame formed by top and bottom rails joined by opposite side rails. Each panel is supported by feet screwed directly into the bottom rail. An elongated raceway is fixed beneath the bottom rail extending longitudinally along the lower edge. Power blocks are fastened to opposite lower corners of the bottom rail and hang within the raceway, and are electrically connected by suitable wires or cables which extend through the raceway. The top horizontal wall of the raceway has a central portion which projects upwardly and is provided with sidewardly projecting ears for extending between and overlapping lower flanges on the bottom rail of a panel for suspending the raceway beneath the rail. This raceway therefore requires the construction of a disadvantageously complex lower panel rail for its mounting to the panels. The raceway comprises two supply passages for carrying electrical wires or cables but only one is easily accessible for inspection of wires and cables, whilst the second is delimited by a fixed side wall of the raceway which does not allow side access to the cables therein.

U.S. Patent No. US-A-4,278,834 describes a wall panel system in which a channel or raceway for fitting to the base of a wall panel comprises an aluminium central I-section member and a plastic base plate fastenable by screws to the lower flange of the I-section member and having cover panels hingeably fastened to the edges thereof. The I-section member defines two electrical cable supply channels, one on each side of its vertical central portion. The outer side of each supply channel is closeable by means of one of the hinged cover panels. A terminal block is fixed to the I-section member adjacent each open end of the raceway and each cover panel has apertures therein adjacent the terminal blocks for receiving outlet plugs or other electrical apparatus. Each cover panel comprises a hooked portion at its upper end which is adapted to engage an upturned upper edge of the I-shaped member to retain the cover in the closed position. The I-shaped member, the terminal blocks and the panel are secured to the base of a wall panel by means of a plurality of screws. This panel system has the disadvantages that the channel comprises several separate components of different materials which require fastening together, and then requires further means for being suspended beneath the panel. The wall panels are erected by means of separate supporting pillars standing at each end of each wall panel and into which the ends of the wall panels engage by means of supporting hooks.

We have appreciated that the construction and erection of divider wall panels could be simplified by replacing the conventional raceways described above by a load-bearing support member which also performs the functions of a raceway. This would advantageously eliminate the requirement for separate supporting feet or columns as used in conventional systems.

The base member according to the invention is characterised as defined in the characterising portion of claim 1. The method of erecting divider panels according to the invention is defined in claim 7.

In accordance with the present invention it is possible to provide a channelled base member for electrical cables which is of easy assembly and low cost and which provides a load supporting function for the panels and easy access to a plurality of supply passages for the cables.

A preferred embodiment of the invention is set forth in the following description which is given by way of non-limiting example with reference to the accompanying drawings in which:

Figure 1 is a view in section of part of the channelled base member according to the invention,

Figure 2 is a view in section of part of the channelled base member shown in Figure 1, in an operating position,

Figure 3 is a view in section on an enlarged scale of a detail from Figure 1,

Figure 4 is a front view of part of the base member shown in Figure 1, and

Figure 5 is a front view in section of part of the base member shown in Figure 1.

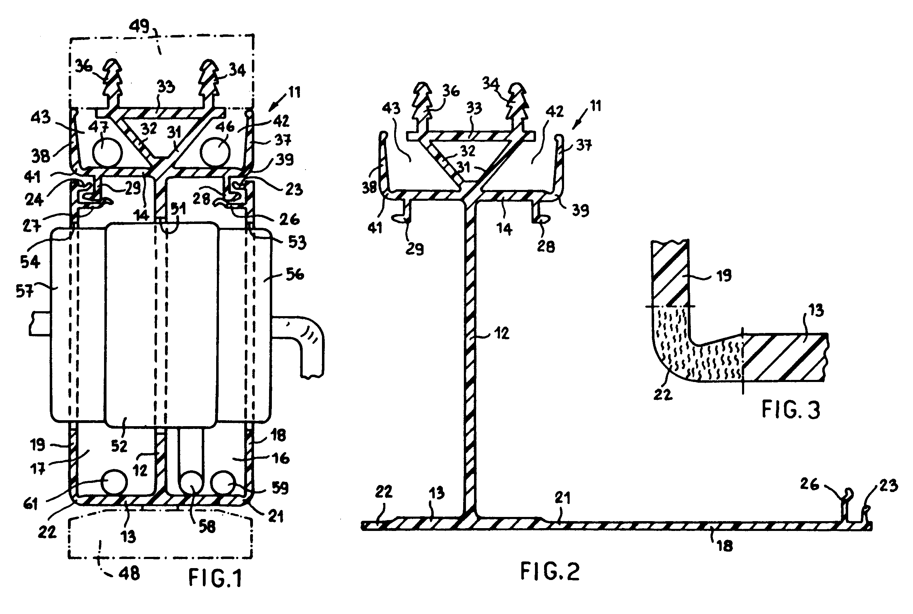

Referring to Figure 1, the channelled base member is indicated generally by reference numeral 11 and comprises a load-bearing support 12 formed by a substantially vertical wall portion having a base 13 and an upper wall portion 14 which is horizontal and parallel to the base 13, both being perpendicular to the load-bearing support 12, thus forming a double T-shaped configuration. The base 13, the wall portion 14 and the load-bearing support 12 define two supply passages or channels 16 and 17 which are respectively closed by two covers 18 and 19 which are formed by two wall portions which are vertical and substantially parallel to the load-bearing support 12, in their closed position. Each cover 18 and 19 is connected to the base 13 by means of a hinge indicated at 21 and 22 respectively. Each cover 18 and 19 is provided on its free end, remote from the respective hinges 21 and 22, with a closure strip portion 23,24 and a resilient strip portion 26, 27 disposed at a lower level than the closure strip portion 23 and 24. Each resilient strip portion 26 and 27 cooperates with a respective latching strip portion 28 and 29 projecting from the horizontal wall portion 14 to hold the respective cover 18 and 19 in a closed position, parallel to the load-bearing support 12, as shown in Figure 1.

Two ribs 31 and 32 which branch away from each other are arranged to project from the upper wall portion 14, opposite to the load-bearing support 12. The ribs 31 and 32 terminate with a horizontal wall portion 33 which is parallel to the upper wall portion 14. Two strip portions 34 and 36 bearing sawtooth configurations project upwardly opposite to the ribs 31 and 32 and adjacent to the free ends of the horizontal wall portion 33.

Two side strip portions 37 and 38 which are in the same plane as the covers 18 and 19 are connected by respective hinges 39 and 41 to the ends of the upper wall portion 14. The side strip portions 37 and 38, with the upper wall portion 14 and the ribs 31 and 32, define two upper supply channels or passages 42 and 43.

The channelled base member 11 is of plastics material, for example PVC, and is produced by means of extrusion in known fashion in one piece. Therefore, all the portions described hereinbefore are integral with each other. During the extrusion operation, using known methods, zones of yielding and flexible material and zones of hard and rigid material are defined. The yielding zones comprise the hinges 21, 22, 39 and 41 and the side strip portions 37 and 38. Figure 3 is a view in section of the hinge 22 on an enlarged scale in order better to distinguish the yielding zone from the hand zone. The hand zones are all the remaining portions. The base member 11 which is produced in channel-defining form by extrusion is of the configuration shown in Figure 2 and is of an unlimited length and can thus be cut according to the requirements involved and at variable lengths, for example 600 mm, 1200mm, 1500mm, and so on.

The yielding zones which define the hinges 21 and 22 (see Figure 1) provide the flexibility necessary for bending of the covers 18 and 19 for engagement of the resilient strip portions 26 and 27 with the latching strip portions 28 and 29. The yielding zones 37, 38, 39 and 41 in turn permit easy bending of those portions for access for example to cables 46 and 47 in the upper supply passages 42 and 43.

Besides performing a support function, the hard zones permit fixing in known matter, for example by means of screws, of the usual support foot members 48 to the base 13 and a divider panel 49 to the wall portion 33 and to the toothed strip portions 34 and 36. When the two covers 18 and 19 are in their closed position, the rigid portions thereof increase the overall rigidity and strength of the entire base member.

Other working operations may also be carried out in a location for working operation on the assembly and for mounting the foot members 48 and the divider panels 49, such as for example: the provision of mountings or openings 51 which are provided in the load-bearing support 12 for mounting multiple power outlets 52. The covers 18 and 19 are in turn provided with two housings or seat means 53 and 54 respectively to permit the connection of electrical plugs 56 and 57 to the outlets 52.

Figure 1 shows one form of assembly in order more clearly to show the concept of use of the channelled base member 11. That form is in no way limiting in respect of the scope of the invention. Besides the multiple outlet 52 and the electrical plugs 56 and 57, also housed in the channel 16 is a cable 58 for the supply of power to the outlet 52 and a second cable 59 for other uses. Housed in the passage 17 is a cable 61 while the cables 46 and 47 are housed in the respective upper supply passages 42 and 43. The cables 46 and 47 may be used for connecting telephones or audiovisual apparatuses or other user devices which are separate from the power cables 58, and the same may be said in respect of the cables 59 and 61.

As already described hereinbefore, the working operations in respect of the hard zones.for providing seat means, housings, holes, openings and so forth may be carried out in the factory during construction of the panels or they may also be easily performed at the location at which the divider panels 49 are to be set up, by means of cutting or milling tools, drills and other portable tools.

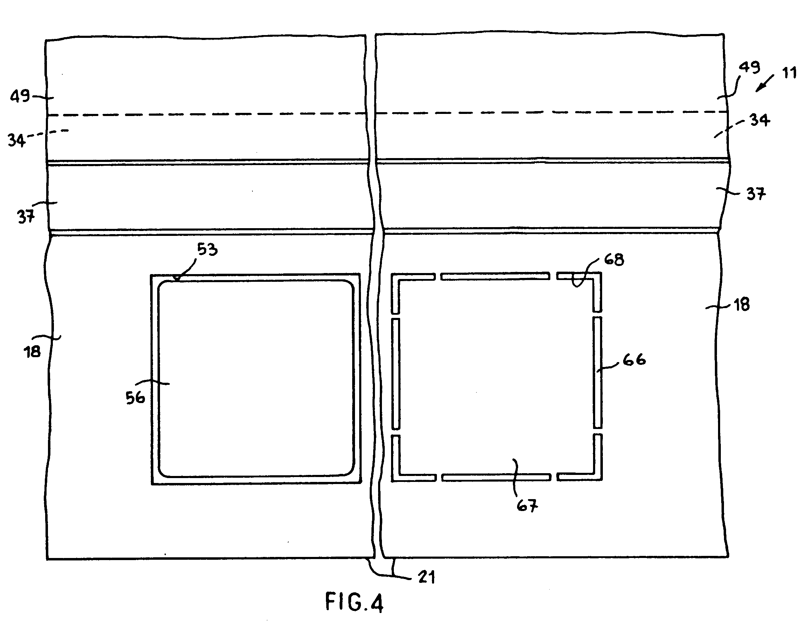

In the embodiment shown in Figure 4 which is a front view of part of the cover 18, it will be seen that there is the seat or opening 53 for the plug 56 and for example a prefabricated portion having slots 66 into which the operator inserts a screwdriver to break off the portion 67 and thus produce an opening 68.

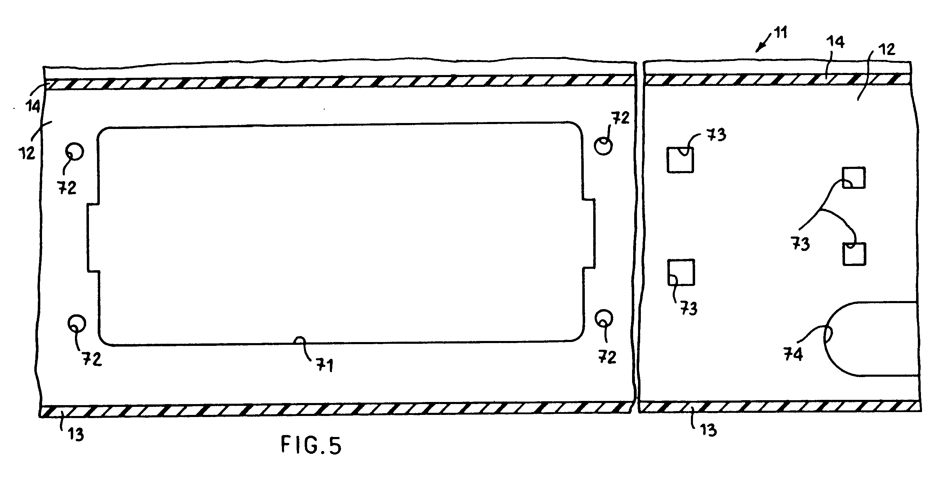

It will be seen from the construction shown in Figure 5 that the load-bearing support 12 may have seat means or openings 71, holes 72 and 73 and slots 74 for any use such as for example for accommodating multiple or single outlets, cables etc.

After the base member 11 (Figure 1) has been cut to size, the operator mounts the various outlets 52 on the support 12, positions the various cables 46, 47, 58, 59 and 61 in the passages 16, 17, 42 and 43 and then rotates the covers 18 and 19 about the hinges 21 and 22 until the resilient strip portions 26 and 27 are engaged with the respective latching strip portions 28 and 29.

For handling or other operations, the operator uses a screwdriver to apply a slight pressure between the closure strip portion 23 and 24 and the external edge of the hinge 39 or 41 until the resilient strip portion 26 or 27 is disengaged from the respective latching strip portion 28 or 29. The operator then rotates the cover 18 and 19 about the hinge 21 or 22 until it takes up the position shown in Figure 2. The operator can now gain access to the outlets 52 (see Figure 1) and to the cables 58, 59 and 61. When his handling operations have been carried out, the operator acts as described above, rotating the cover 18, 19 until the resilient strip portion 26 or 27 is engaged with the respective latching strip portion 28 and 29, and finally he re-fits the plugs 56 and 57.

The channelled base member 11 as described hereinbefore is strong, compact, functional and simple and permits substantial speed of mounting for supplying items of electrical equipment disposed adjacent to the divider panels 49.

It will be appreciated that the channelled base member 11 for divider panels 49 may be the subject of various modifications and improvements both in respect of the shape and the arrangement of the various parts without thereby departing from the scope of the invention.

## Claims

1. A channelled base member for divider panels provided with supply passages (16) for electrical cables (58,59) for supplying items of electrical equipment disposed near the divider panels, and comprising a base (13), an upper wall portion (14), and a substantially vertical wall portion (12), made of plastic material and defining first and second supply passages (16,17) disposed on opposite sides of the vertical wall portion, in which the base (13) is integral with a substantially rigid cover element (18) connected thereto by a flexible hinge (21) and movable between a first position in which access to a first supply passage (16) is allowed and a second position in which the cover (18) completely covers the first passage (16), in which a latch means latches the cover (18) with the upper wall portion (14) when the cover element (18) is in the second position, characterised in that the upper wall portion (14), the base (13) and the vertical wall portion (12) form a substantially rigid, double T-shaped configuration for supporting the panels, the base and the upper wall portion respectively defining first and second flanges; a second substantially rigid cover element (19) is integral with the first flange (13) through another flexible hinge (22) and is movable between first and second positions respectively for access to and for closing of the second supply passage (17), another latch means being provided to latch the second cover in its second position; the one and the other latch means respectively comprise first and second latch members (28,29) on the second flange (14) and first and second resilient members (26,27) on the first and second cover elements (18,19) cooperative with the first and second latch members (28,29) for latching the first and second cover elements (18,19) in their second positions; and the second flange (14) is integral with two projecting toothed strip portions (34,36) for supporting a divider panel.

2. A channelled base member according to claim 1, characterised in that the substantially vertical wall portion (12) is capable of being worked to permit fixing of support foot members.

3. A channelled base member according to claim 1 or 2, characterised in that the second flange (14) is integral with two upwardly inclined ribs (31, 32) which support at their upper ends a horizontal portion (33), and with two hinges (39,41) connected to two moveable side strip portions (37,38), in which the toothed strip portions (34,36) project from the horizontal portion, and in which the second flange (14), the two ribs (31,32), the horizontal portion (33) and the two side strip portions (37,38) define two further supply passages (42,43), the moveable side strip portions forming openable covers for the two further supply passages.

4. A channelled base member according to claim 3, characterised in that the two hinges (39,41) integral with and connecting the second flange and the two side strip portions (37,38) are formed by yielding flexible zones, the side strip portions (37,38) being movable to permit access to the two further supply passages (42,43).

5. A channelled base member according to any preceding claim characterised in that the substantially vertical wall portion (12) comprises mountings (51) capable of carrying power outlets (52) which can be connected to cables (58,59,61) disposed in the first and second supply passages (16,17).

6. A channelled base member according to claim 5, characterised in that the two cover elements (18,19) comprise a series of prefabricated portions for producing openings (53,54) for permitting the connection of electrical plugs (56,57) to the power outlets (52).

7. A method of erecting a divider panel characterised in that the divider panel is supported by a channelled base member as defined in any of claims 1 to 6, the divider panel comprising means for engaging the base member.

**Patentansprüche**

1. Mit Kanälen versehener Basisteil für Trennungspaneele mit Versorgungskanälen (16) für elektrische Kabel (58, 59) zum Versorgen von Teilen elektrischer Einrichtungen, die in der Nahe der Trennungspaneele angeordnet sind, und mit einer Basis (13), einem oberen Wandteil (14) und einem im wesentlichen vertikalen Wandteil (12), die aus Kunststoff hergestellt sind und einen ersten und einen zweiten Versorgungskanal (16, 17) begrenzen, die auf sich gegenüberliegenden Seiten des vertikalen Wandteils angeordnet sind, wobei die Basis (13) einteilig mit einem im wesentlichen steifer Deckelelement (18) ausgebildet ist, das durch ein flexibles Gelenk (21) mit dieser verbunden und zwischen einer ersten Lage, in der ein Zugang zu einem ersten Versorgungskanal (16) möglich ist, und einer zweiten Lage, in der der Deckel (18) den ersten Kanal (16) vollständig abdeckt, bewegbar ist, und wobei ein Verriegelungsmittel den Deckel (18) mit dem oberen Wandteil (14) verriegelt, wenn das Deckelelement (18) die zweite Lage einnimmt, **dadurch gekennzeichnet,** daß der obere Wandteil (14), die Basis (13) und der vertikale Wandteil (12) eine im wesentlichen starre, doppel-T-förmige Konfiguration zur Abstützung der Paneele bilden, während die Basis und der obere Wandteil jeweils einen ersten und einen zweiten Flansch begrenzen;

ein zweites im wesentlichen starres Dekkelelement (19) einteilig mit dem ersten Flansch (13) durch ein weiteres flexibles Gelenk (22) verbunden und zwischen der ersten und zweiten Lage Jeweils für einen Zugang zum zweiten Versorgungskanal (17) und zum Schließen des zweiten Versorgungskanals bewegbar ist, während ein zweites Verriegelungsmittel vorgesehen ist, um den zweiten Deckel in seiner zweiten Lage zu verriegeln;

das eine und das andere Verriegelungsmittel jeweils ein erstes und ein zweites Verriegelungsglied (28, 29) am zweiten Flansch (14) und ein erstes und ein zweites elastisches Glied (26, 27) am ersten und zweiten Deckelelement (18, 19) aufweisen, die mit dem ersten und zweiten Verriegelungsglied (28, 29) zusammenwirken, um das erste und zweite Deckelelement (18, 19) in seiner zweiten Lage zu verriegeln; und

der zweite Flansch (14) einteilig mit zwei vorstehenden gezahnten Leistenteilen (34, 36) zum Abstützen eines Trennungspaneels ausgebildet ist.

2. Basisteil nach Anspruch 1, **dadurch gekennzeichnet,** daß der im wesentliche vertikale Wandteil (12) bearbeitbar ist, um das Befestigen von Stützfußteilen zu ermögllchen.

3. Basisteil nach Anspruch 1 oder 2, **dadurch gekennzeichnet,** daß der zweite Flansch (14) einteilig mit zwei nach oben geneigten Rippen (31, 32), die an ihrem oberen Ende einen horizontalen Teil (33) tragen, und mit zwei Gelenken (39, 41), die mit zwei beweglichen seitlichen Leistenteilen (37, 38) verbunden sind, ausgebildet ist, wobei die gezahnten Leistenteile (34, 36) von dem horizontalen Teil aus vorspringen und wobei der zweite Flansch (14), die beiden Rippen (31, 32), der horizontale Teil (33) und die beiden seitlichen Leistenteile (37, 38) zwei obere Versorgungskanäle (42, 43) begrenzen und die beweglichen seitlichen Leistenteile aufmachbare Deckel für die beiden weiteren Versorgungskanäle bilden.

4. Basisteil nach Anspruch 3, **dadurch gekennzeichnet,** daß die beiden Gelenke (39, 41), die einteilig mit dem zweiten Flansch ausgebildet sind und diesen mit den beiden seitlichen Leistenteilen (37, 38) verbinden, durch elastisch biegsame Zonen gebildet und beweglich sind, um einen Zugang zu den beiden weiteren Versorgungskanälen (42, 43) zu ermöglichen.

5. Basisteil nach einem der vorstehenden Ansprüche,
   **dadurch gekennzeichnet,**
   daß der im wesentliche vertikale Wandteil (12) Halterungen (51) zum Tragen von Leistungsausgängen (52), die mit in dem ersten und zweiten Versorgungskanal (16, 17) angeordneten Kabeln (58, 59, 61) verbindbar sind, aufweist.

6. Basisteil nach Anspruch 5,
   **dadurch gekennzeichnet,**
   daß die beiden Deckelelemente (18, 19) eine Reihe vorgefertigter Teile zur Bildung von Öffnungen (53, 54) aufweisen, die den Anschluß elektrischer Stecker (56, 57) an die Leistungsausgänge (52) gestatten.

7. Verfahren zum Errichten eines Teilungspaneels,
   **dadurch gekennzeichnet,**
   daß das Teilungspaneel durch einen Kanäle aufweisenden Basisteil nach einem der Ansprüche 1 bis 6 getragen wird und Mittel zum Anmontieren des Basisteils aufweist.

## Revendications

1. Organe formant base pourvue de gaines destinée à des panneaux de dérivation et pourvue de couloirs d'amenée (16) de câbles électriques (58, 59) destinés à alimenter des appareils d'équipement électrique disposés près des panneaux de dérivation, et comportant une base (13), une partie (14) formant paroi supérieure, et une partie (12) formant paroi sensiblement verticale, faites de matière plastique et délimitant un premier et un second couloirs (16, 17) d'amenée disposés sur les côtés opposés de la partie formant paroi verticale, dans lequel la base (13) fait corps avec un élément (18) formant capot sensiblement rigide qui lui est raccordé par une articulation flexible (21) et qui est susceptible de se déplacer entre une première position dans laquelle est permis un accès à un premier couloir (16) et une seconde position dans laquelle le capot (18) recouvre complètement ce premier couloir (16), dans lequel un moyen formant verrou verrouille le capot (18) sur la partie formant paroi supérieure (14) lorsque l'élément formant capot (18) est dans la seconde position,
   caractérisé en ce que la partie formant paroi supérieure (14), la base (13) et la partie formant paroi verticale (12) constituent une configuration sensiblement rigide, en forme de double T, destinée à supporter les panneaux, la base et la partie formant paroi supérieure définissant respectivement des première et seconde membrures;
   un second élément formant capot (19) sensiblement rigide fait corps avec la première membrure (13) par l'intermédiaire d'une autre articulation flexible (22) et est susceptible de se déplacer entre une première et une seconde positions destinées respectivement à l'accès au et à la fermeture du second couloir d'amenée (17), un autre moyen formant verrou étant disposé de façon à verrouiller le second capot dans sa seconde position;
   l'un et l'autre des deux moyens formant verrous comportent respectivement un premier et un second organes (28, 29) formant verrous situés sur la seconde membrure (14) et un premier et un second organes élastiques (26, 27) situés sur les premier et second éléments formant capots (18, 19) agissant en commun avec les premier et second organes formant verrous (28, 29) afin de verrouiller les premier et second éléments (18, 19) formant capots dans leurs secondes positions; et
   la seconde membrure (14) fait corps avec deux parties faisant saillies formant bandes dentelées (34, 36) destinées à supporter un panneau de dérivation.

2. Organe formant base pourvue de gaines conforme à la revendication 1, caractérisé en ce que la partie (12) formant paroi sensiblement verticale est apte à être façonnée de façon à permettre la fixation d'organes formant semelles d'appuis.

3. Organe formant base pourvue de gaines conforme à la revendication 1 ou à la revendication 2, caractérisé en ce que la seconde membrure (14) fait corps avec deux nervures (31, 32) inclinées vers le haut qui supportent à leurs extrémités supérieures une partie horizontale (33), et avec deux articulations (39, 41) raccordées à deux parties (37, 38) formant bandes latérales susceptibles de se déplacer, dans lequel les parties formant bandes dentelées (34, 36) font saillies à partir de la partie horizontale, et dans lequel la seconde membrure (14), les deux nervures (31, 32), la partie horizontale (33) et les deux parties formant bandes latérales (37, 38) délimitent deux autres couloirs d'amenée (42, 43), les parties formant bandes latérales susceptibles de se déplacer constituant des capots susceptibles d'être ouverts destinés à ces deux autres couloirs d'amenée.

4. Organe formant base pourvue de gaines conforme à la revendication 3, caractérisé en ce que les deux articulations (39, 41) raccordant la seconde membrure aux deux parties formant bandes latérales (37, 38) et faisant corps avec elles sont constituées par des zones flexibles déformables, les parties formant bandes latérales (37, 38) étant susceptibles de se déplacer afin de permettre un accès aux deux autres couloirs d'amenée (42, 43).

5. Organe formant base pourvue de gaines conforme à l'une quelconque des revendications précédentes caractérisé en ce que la partie (12) formant paroi sensiblement verticale comporte des montures (51) aptes à porter des prises de courant (52) qui peuvent être connectées à des câbles (58, 59, 61) disposés dans les premier et second couloirs d'amenée (16, 17).

6. Organe formant base pourvue de gaines conforme à la revendication 5, caractérisé en ce que les deux éléments formant capots (18, 19) comportent une série de parties préfabriquées afin de créer des ouvertures (53, 54) destinées à permettre le raccordement de fiches électriques mâles (56, 57) sur les prises (52) de courant.

7. Procédé de montage d'un panneau de dérivation caractérisé en ce que le panneau de dérivation est supporté par un organe formant base pourvue de gaines tel que défini par l'une quelconque des revendications 1 à 6, le panneau de dérivation comportant des moyens destinés à s'emboîter dans l'organe formant base.

FIG.1

FIG.2

FIG.3

FIG.4

FIG.5

EP 0 217 514 B1